# EUROPEAN PATENT SPECIFICATION

(11) **EP 2 751 893 B1**
(45) Date of publication and mention of the grant of the patent: **30.03.2016**
(21) Application number: 12826627.7
(22) Date of filing: 20.12.2012
(51) Int. Cl.: H02H 3/033, H02H 3/027, H02H 3/087, H02H 3/093, H02H 7/26, H02H 7/30, H02H 3/06, G05B 9/02, H02J 1/00

(54) **OVERLOAD DETECTION DEVICE**
ÜBERLASTDETEKTIONSVORRICHTUNG
DISPOSITIF DE DÉTECTION DE SURCHARGE

(30) Priority: 22.12.2011 US 201161579001 P
(43) Date of publication of application: 09.07.2014
(73) Proprietor: Koninklijke Philips N.V., 5656 AE Eindhoven (NL)
(72) Inventor: VAN HARTSKAMP, Michael Alex, NL-5656 AE Eindhoven (NL); ALARCON-RIVERO, Manuel Eduardo, NL-5656 AE Eindhoven (NL); WENDT, Matthias, NL-5656 AE Eindhoven (NL); ERDMANN, Bozena, NL-5656 AE Eindhoven (NL); DRAAIJER, Maurice Herman Johan, NL-5656 AE Eindhoven (NL)
(74) Representative: van Eeuwijk, Alexander Henricus Waltherus
(86) International application number: PCT/IB2012/057501
(87) International publication number: WO 2013/093814

(56) References cited:
- DE-A1- 2 148 581
- US-A1- 2002 118 500
- US-A1- 2011 075 307

## Description

### FIELD OF THE INVENTION

The invention relates to an overload detection device for detecting an overload condition in a direct current (DC) system. The invention relates further to a corresponding overload detection method and overload detection computer program for detecting an overload condition in a DC system, and to a DC system comprising the overload detection device.

### BACKGROUND OF THE INVENTION

The DC voltage source of the company NexTek continuously monitors the total load on a single bus bar, wherein as soon as an overload is detected, it completely switches off the bus bar with all loads connected to it and then goes into a mode, where it retries to power the bus bar. In particular, it verifies whether the overload is still present. If it is still present, it again switches off the power. Typically, the overload is still present, because the load is not adjusted, until some manual intervention is done. Consequently, the DC voltage source electronics runs into a livelock that it cannot exit and an installer needs to be urgently called.

US 2011/0075307 A1 describes an overcurrent protection circuit. An overcurrent detecting element is connected between a power source and a load and detects an overcurrent flowing through the load. A main switch element is connected between the load and the overcurrent detecting element and controls flow of current to the load according to a voltage applied between a control end and an input end of the main switch element. The main switch element stops the flow of current to the load when a predetermined time is elapsed after the overcurrent detecting element detects the overcurrent flowing through the load. A first switch element has an output end connected to the control end of the main switch element. A current flows to the first switch when the overcurrent detecting element detects the overcurrent flowing through the load.

DE 2148581 discloses a circuit for use in electrical supply networks, particularly on ships, with power switches at various levels, which have selectively staggered release facilities. Fuses are provided in the last level before the loads. An electrical measurement and electronic evaluation and release facility is assigned to each power switch. The release time is dependent on the main current in a manner leading to reproducible current characteristics.

In US 2002/011850 A1, a solid state circuit breaker is disclosed for use in connection with a voltage bus. The voltage bus supplies electrical current to a load. The solid state circuit breaker includes a current controller for controlling the magnitude of current supplied by the voltage bus. A first current sensor senses the magnitude of the electrical current supplied by the voltage bus, the first current sensor having an output in communication with the current controller. An inductor is included within the first current sensor, the inductor providing a back electromotive force on the voltage bus. The back electromotive force is proportional to the rate of change of current flowing through the voltage bus.

### SUMMARY OF THE INVENTION

It is an object of the present invention to provide an overload detection device, an overload detection method and an overload detection computer program for detecting an overload condition in a DC system, which allow for an improved recovery of the DC system, after an overload condition has been detected. It is a further object of the present invention to provide a corresponding DC system comprising the overload detection device.

In a first aspect of the present invention an overload detection device for detecting an overload condition in a DC system according to claim 1 is presented.

The DC system comprises a DC voltage source and several electrical devices electrically connected to the DC voltage source and wherein the overload detection device comprises an overload detection unit for detecting the overload condition, and a reducing unit for reducing the power consumed by an electrical device of the several electrical devices, if the overload detection unit detects the overload condition.

Since the overload detection device reduces the power consumed by an electrical device of the several electrical devices, if the overload detection unit detects the overload condition, the overload condition maybe removed, without requiring manual intervention. This allows for an improved recovery of the DC system.

The overload detection unit preferentially detects whether the load in the DC system is larger than a predefined power limit. For instance, the overload detection unit can be adapted to check for a limit of 100 VA as defined in the EMerge standard. It can comprise a zero power detector for detecting the overload condition.

It is preferred that the reducing unit is adapted to prevent the electrical device of the several electrical devices from consuming power from the DC voltage source, if the overload detection unit detects the overload condition. Preferentially, the reducing unit comprises a switch for breaking the circuit at an electrical device to which voltage should not be supplied anymore.

According to the present invention, the reducing unit is adapted to prevent the electrical devices one after the other from consuming power from the DC voltage source in accordance with an order defined by their respective loads, as long as an overload condition is detected. Preferentially, the electrical devices are switched off one after the other in an increasing load order, i.e. firstly the electrical device having the smallest load, secondly the electrical device having the second smallest load, et cetera are switched off, as long as an overload condition is detected. This can ensure that the largest possible load is consumed by the electrical devices, in order to provide a good utilization of the available power.

The switching procedures can be performed by using a communication mechanism like Zigbee, i.e. the reducing unit can comprise a controller controlling the electrical devices via the communication mechanism.

It is further preferred that the reducing unit is adapted to restore the consumption of power by an electrical device, if an, in accordance with the order, following electrical device has been prevented from consuming power. Thus, the electrical devices can be switched off one after the other in an increasing load order, wherein an electrical device is switched on again, if a following electrical device is switched off, i.e. firstly the electrical device having the smallest load is switched off, secondly the electrical device having the second smallest load is switched off and the electrical device having the smallest load is switched on again, et cetera, as long as an overload condition is detected. This can ensure that only the smallest load needed for removing the overload condition is switched off, thereby providing a good utilization of the available power.

The reducing unit can be adapted to determine the loads of the electrical devices. Alternatively, another unit can be used for determining the loads of the electrical devices, wherein the determined loads can be indicated to the reducing unit for allowing the reducing unit to prevent the electrical devices from consuming power from the DC voltage source in accordance with their loads.

The loads of the electrical devices can be determined by using previous load measurements, wherein the resulting loads or a corresponding order of the electrical devices in accordance with their loads can be stored in a storing unit, wherein in operation load information can be retrieved from the storing unit. Alternatively, each electrical device can communicate its load to the reducing unit via, for instance, Zigbee, in order to allow the reducing unit to determine the order of the electrical devices in accordance with their loads.

It is also preferred that the reducing unit is adapted to determine the smallest number of electrical devices such that, if these electrical devices are prevented from consuming power from the DC voltage source, the overload condition is not present anymore, and to prevent these electrical devices from consuming power from the DC voltage source. For instance, the reducing unit can be adapted to determine an electrical device having a load being large enough to bring the DC system immediately back to an acceptable total load. Also this provides a good utilization of the available power.

In a further preferred embodiment the reducing unit is adapted to request an electrical device to consume less power in accordance with request rules, if the overload condition is detected. Thus, similar to smart-grid components the reducing unit can request one or several electrical devices to consume less power such that the overload condition can be removed. The request rules can define which electrical devices should be switched off, if an overload condition is detected. For instance, if the electrical devices are lamps for illuminating rooms, the request rules can define that certain lamps in certain rooms are to be switched off, whereas other lamps should not be switched off, for instance, to assure a minimum required illumination level.

In a further aspect of the present invention an electrical conductor for electrically connecting a DC voltage source with several electrical devices is presented, wherein the electrical conductor comprises an overload detection device as defined in claim 1. The electrical conductor is preferentially a bus bar.

In a further aspect of the present invention a DC system in accordance with claim 7 is presented.

It is preferred that the DC voltage source comprises a voltage source overload detection unit for detecting an overload condition in the DC system, wherein the DC voltage source is adapted to switch the supplying of power off, if an overload condition is detected, and to switch the supplying of power on, if the overload is not detected anymore. The DC voltage source can be adapted to be switched off, if a limit of 100 VA is detected as defined in the EMerge standard. In particular, the DC voltage source, which can also be regarded as being a power supply module (PSM), can be adapted to be in line with the EMerge standard. Also the electrical devices, which may be regarded as being peripherals, can be in line with the EMerge standard.

In an embodiment, the overload detection device is adapted to perform the overload detection and power consumption reduction procedures in a first time duration, wherein the DC voltage source is adapted to perform the overload detection and power switching off procedures in a second time duration, wherein the first time duration is smaller than the second time duration. In particular, the overload detection device can be so fast that, after it has detected an overload condition, the normal condition is recovered, before the DC voltage source switches off the power supply. In this case, the DC voltage source just continues to behave normally.

In a further aspect of the present invention an overload detection method for detecting an overload condition in a DC system in accordance with claim 10 is presented.

In a further aspect of the present invention an overload detection computer program for detecting an overload condition in a DC system in accordance with claim 11 is presented.

It shall be understood that the overload detection device of claim 1, the electrical conductor of claim 6, the DC system of claim 7, the overload detection method of claim 14, and the overload detection computer program of claim 11 have similar and/or identical preferred embodiments, in particular, as defined in the dependent claims.

It shall be understood that a preferred embodiment of the invention can also be any combination of the dependent claims with the respective independent claim.

These and other aspects of the invention will be apparent from and elucidated with reference to the embodiments described hereinafter.

### BRIEF DESCRIPTION OF THE DRAWINGS

In the drawings:
Figs. 1,3,5 and 7 show schematically and exemplarily different embodiments of DC systems comprising overload detection devices,
Figs. 2, 4, 6 and 8 show schematically and exemplarily embodiments of overload detection devices of the DC systems, and
Fig. 9 shows a flowchart exemplarily illustrating an embodiment of an overload detection method for detecting an overload condition in a DC system.

### DETAILED DESCRIPTION OF EMBODIMENTS

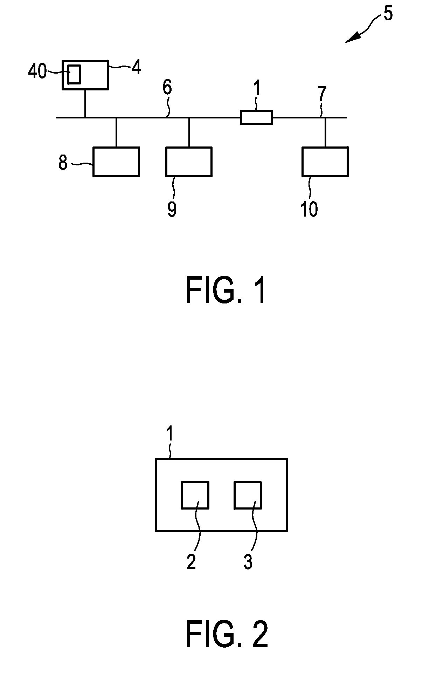

Fig. 1 shows schematically and exemplarily an embodiment of a DC system 5 comprising a DC voltage source 4 for the supplying DC power to electrical devices 8, 9, 10, electrical conductors 6, 7 for electrically connecting the DC voltage source 4 with the electrical devices 8, 9, 10 and an overload detection device 1.

The DC voltage source 4 comprises a voltage source overload detection unit 40 for detecting an overload condition in the DC system 5, wherein the DC voltage source 4 is adapted to switch the supplying of power off, if an overload condition is detected, and to switch the supplying of power on, if the overload condition is not detected anymore or after a predefined time has been elapsed. The DC voltage source can be adapted to be switched off, if a limit of 100 VA is detected as defined in the EMerge Standard. In particular, the DC voltage source 4 can be adapted to be in line with the EMerge Standard.

The overload detection device 1, which is schematically and exemplarily shown in Fig. 2, is adapted to detect an overload condition in the DC system 5 and comprises an overload detection unit 2 for detecting the overload condition and a reducing unit 3 for reducing the power consumed by an electrical device of the several electrical devices 8, 9, 10, if the overload detection unit 2 detects the overload condition. The overload detection unit 2 preferentially detects whether the load in the DC system 5 is larger than a predefined power limit. For instance, the overload detection unit 2 can be adapted to check for a limit of 100 VA as defined in the EMerge Standard. The overload detection unit 2 can comprise a zero power detector for detecting the overload condition. The zero power detector detects whether there is zero power or not. If there is zero power, it is assumed that the DC voltage source 4 has detected an overload condition and, thus, has itself switched off. Thus, the zero power detector allows detecting an overload condition indirectly by detecting whether the DC voltage source 4 has switched off the power supply. The overload detection unit can also be adapted to directly detect the power and to compare the detected power with a predefined upper power limit of, for instance, 100 VA.

The reducing unit 3 is adapted to prevent the electrical device 10 from consuming power from the DC voltage source 4, if the overload detection unit 2 detects the overload condition. In this embodiment, the reducing unit 3 comprises a switch for breaking the circuit at the electrical device 10 to which voltage should not be supplied anymore. In order to allow the reducing unit 3 to prevent the electrical device 10 from consuming power from the DC voltage source 4, the overload detection device 10 is arranged between the DC voltage source 4 and the electrical device 10. In particular, the overload detection device 1 is adapted to ensure that in normal operation, i.e. if an overload condition is not detected, energy is flowing on both sides of the overload detection device 1 and to disrupt the electrical connection, if an overload condition is detected.

The overload detection device 1 electrically connects the two electrical conductors 6, 7, which can be regarded as being a first electrical conductor 6 and a second electrical conductor 7, wherein the DC voltage source 4 is electrically connected to the first electrical conductor 6 and the electrical device 10 is electrically connected to the second electrical conductor 7.

The electrical conductors 6, 7 are bus bars. They can be off-the-shelf bus bars. Moreover, the busbars can be made of metal with 2x2 electrical layers. Correspondingly, the overload detection device 1 can be an independent connector for connecting off-the-shelf bus bars. In another embodiment, the overload detection device can also be adapted to be integrated in an electrical conductor, in particular, to be integrated in a bus bar, between the DC voltage source and at least one electrical device.

If the overload detection unit 2 is adapted to detect the overload condition independently of the detection of the overload condition performed by the DC voltage source 4, the overload detection device 1 can be adapted to perform the overload detection and power consumption reduction procedures in a first time duration, and the DC voltage source 4 can be adapted to perform the overload detection and power switching off procedures in a second time duration, wherein the first time duration can be smaller than the second time duration. In particular, the overload detection device 1 can be so fast that, after it has detected an overload condition, the normal condition is recovered, i.e., for instance, the electrical device 10 is switched off, before the DC voltage source 4 switches off the power supply. In this case, the DC voltage source 4 just continues to behave normally. The result can also be a faster resolution.

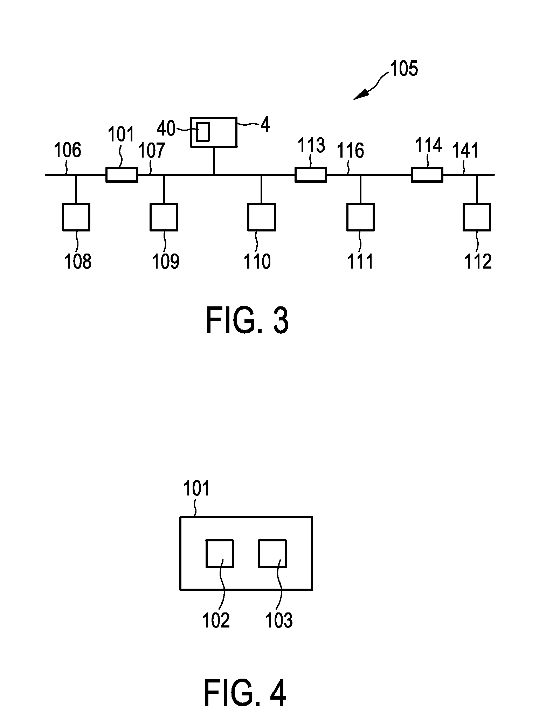

Fig. 3 shows schematically and exemplarily a further embodiment of a DC system. The DC system 105 also comprises a DC voltage source 4, electrical devices 108 to 112, electrical conductors 106, 107, 116, 141 being, in this embodiment, bus bars for electrically connecting the DC voltage source 4 with the electrical devices 108 to 112, and overload detection devices 101, 113, 114. The DC voltage source 4, the electrical conductors 106, 107, 116, 141 and the electrical devices 108 to 112 can be similar to the corresponding elements described above with reference to Fig. 1. The electrical devices are, for instance, light sources, sensors or other electrical devices.

Each of the overload detection devices 101, 113, 114 comprises an overload detection unit for detecting an overload condition and a reducing unit for reducing the power consumed by an electrical device, if the overload detection unit detects the overload condition. Fig. 4 shows exemplarily and schematically the overload detection unit 102 and the reducing unit 103 of the overload detection device 101. The reducing unit 103 is adapted to wait a delay time, after an overload condition has been detected and before the respective electrical device is prevented from consuming power from the DC voltage source 4. Each of the overload detection devices 101, 113, 114 comprises such a reducing unit being adapted to wait a delay time, after an overload condition has been detected and before the respective electrical device is prevented from consuming power from the DC voltage source. The delay time increases with decreasing distance to the DC voltage source 4. For instance, the delay time for the overload detection device 114 shown in Fig. 3 is smaller than the delay time for the overload detection device 113. The different delay times ensure that, if an overload condition occurs, firstly the electrical device 112 having the largest distance to the DC voltage source 4 is prevented from being further powered by the DC voltage source 4, wherein, if the overload condition is still present, secondly the electrical device 111 having the second largest distance to the DC voltage source is prevented from being powered by the DC voltage source 4, and so on, until the DC voltage source 4 detects that the overload condition is not present anymore, whereupon the DC voltage source 4 switches the power supply on.

The reducing unit can comprise a user interface for allowing a user to input the respective delay time directly into the reducing unit. The reducing unit can also comprise a storing unit in which assignments between delay times and distances to the DC voltage source are stored, wherein the reducing unit can comprise a graphical user interface for allowing a user to input the respective distance or the reducing unit can be adapted to determine the respective distance, wherein the reducing unit can be further adapted to determine the delay time based on the distance and the assignments between distances and delay times. For determining the respective distance known distance measurement techniques can be implemented in the reducing unit. For instance, the reducing unit can be adapted to perform a precision measurement of voltage and to determine the distance based on this voltage. In particular, since the voltage drops from the DC voltage source with increasing distance to the DC voltage source because of the resistance in the electrical conductor as well as in connecting and switching devices, the distance to the DC voltage source can be determined based on the measured voltage.

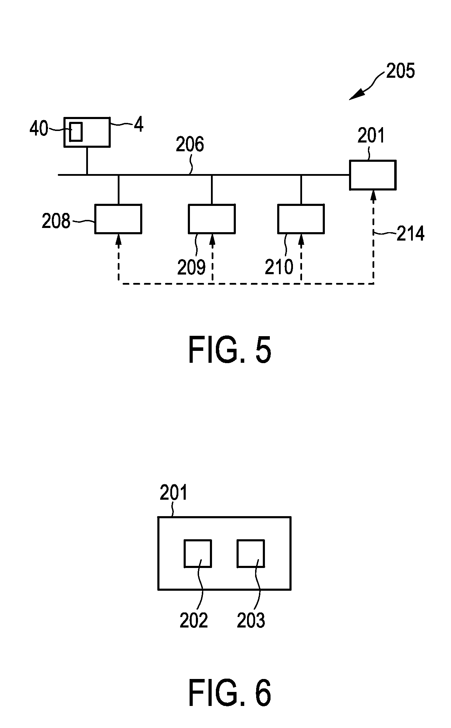

Fig. 5 shows schematically and exemplarily a further embodiment of a DC system. The DC system 205 comprises a DC voltage source 4 electrically connected with electrical devices 208, 209, 210 via an electrical conductor 206 being a bus bar. The DC voltage source 4 and the electrical conductor 206 can be similar to the DC voltage sources and electrical conductors described above with reference to Figs. 1 and 3. The electrical devices 208, 209, 210 can be light sources, sensors or other electrical devices. The DC system 205 further comprises an overload detection device 201 exemplarily and schematically shown in Fig. 6. The overload detection device 201 comprises an overload detection unit 202 for detecting an overload condition in the DC system 205 and a reducing unit 203 for reducing the power consumed by an electrical device, if the overload detection unit 202 detects the overload condition. The overload detection unit 202 can be similar to the overload detection unit 2 described above with reference to Figs. 1 and 2. The reducing unit 203 is adapted to prevent the electrical devices 208, 209, 210 one after the other from consuming power from the DC voltage source 4 in accordance with an order defined by their respective loads, as long as an overload condition is detected. Preferentially, the electrical devices 208, 209, 210 are switched off one after the other in an increasing load order, i.e. firstly the electrical device having the smallest load, secondly the electrical device having the second smallest load, et cetera are switched off, as long as an overload condition is detected. In order to allow the reducing unit 203 to switch the electrical devices 208, 209, 210 selectively on and off, the reducing unit 203 comprises a controller for controlling the electrical devices 208, 209, 210 via a communication mechanism 214 like Zigbee. The reducing unit 203 can be adapted to restore the consumption of power by an electrical device, if an, in accordance with the order, following electrical device has been prevented from consuming power. Thus, the electrical devices 208, 209, 210 can be switched off one after the other in an increasing load order, wherein an electrical device is switched on again, if a following electrical device is switched off, i.e. firstly the electrical device having the smallest load is switched off, secondly the electrical device having the second smallest load is switched off and the electrical device having the smallest load is switched on again, et cetera, as long as an overload condition is detected. Alternatively, the reducing unit 203 can be adapted to control the electrical devices 208, 209, 210 in accordance with an other bin packing algorithm.

The electrical devices 208, 209, 210 can be adapted to send their loads to the reducing unit 203 via the communication mechanism 214. Alternatively, the loads of the electrical devices 208, 209, 210 can be stored in a storing unit of the reducing unit 203, wherein the stored loads can have been input by a user, after the loads of the electrical devices 208, 209, 210 have been measured. In a further embodiment, the reducing unit can be adapted to determine the loads of the electrical devices, or another unit can be used for determining the loads of the electrical devices, wherein the determined loads can be indicated to the reducing unit via a communication mechanism like Zigbee for allowing the reducing unit to prevent the electrical devices from consuming power from the DC voltage source in accordance with their loads.

Generally, the reducing unit 203 can be adapted to request an electrical device to consume less power in accordance with request rules, if the overload condition is detected. Thus, similar to smart-grid components the reducing unit 203 can request one or several electrical devices to consume less power such that the overload condition can be removed. The request rules can define which electrical devices should be switched off, if an overload condition is detected. For instance, if the electrical devices 208, 209, 210 are lamps for illuminating rooms, the request rules can define that certain lamps in certain rooms are switched off, whereas other lamps are not switched off, for instance, to assure a minimum required illumination level. Moreover, the reducing unit 203 can be adapted to determine the smallest number of electrical devices such that, if these electrical devices are prevented from consuming power from the DC voltage source 4, the overload condition is not present anymore, and to prevent these electrical devices from consuming power from the DC voltage source 4. For instance, the reducing unit 203 can be adapted to determine an electrical device having a load being large enough to bring the DC system 205 immediately back to an acceptable total load.

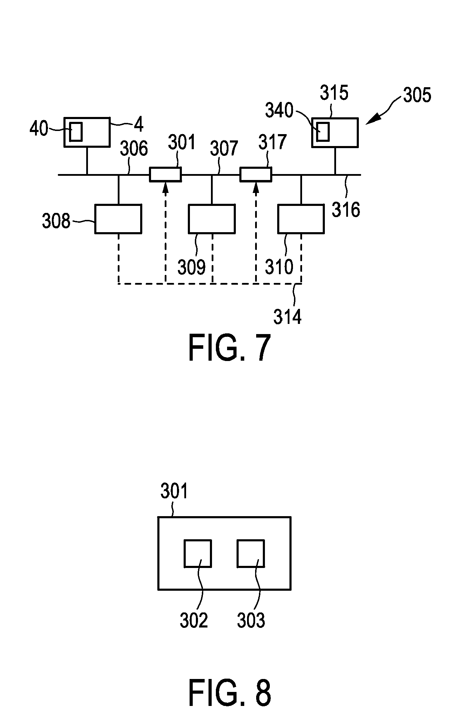

Fig. 7 shows schematically and exemplarily a further embodiment of a DC system. The DC system 305 shown in Fig. 7 comprises a first DC voltage source 4, electrical conductors 306, 307, 316 for electrically connecting the DC voltage source 4 with first, second and third electrical devices 308, 309, 310, a second DC voltage source 315 with a voltage source overload detection unit 340, and first and second overload detection devices 301, 317. The DC voltage sources 4, 315 are similar to the DC voltage sources described above with reference to Figs. 1, 3 and 5. The electrical conductors 306, 307, 316 are similar to the electrical conductors described above with reference to Figs. 1, 3 and 5 and are preferentially bus bars. The electrical devices 308, 309, 310 are, for instance, lamps, sensors or other electrical devices. The overload detection devices 301, 317 communicate with the electrical devices 308, 309, 310 via a communication mechanism 314, which may be a Zigbee mechanism. The first and second communication devices 301, 317 are similar, wherein the first overload detection device 301 is schematically and exemplarily shown in Fig. 8.

The first overload detection device 301 comprises an overload detection unit 302 for detecting the overload condition in the DC system 305 and a reducing unit 303 for reducing the power consumed by an electrical device, if the overload detection unit 302 detects the overload condition. The overload detection unit 302 is similar to the overload detection units described above with reference to Figs. 2, 4 and 6. The reducing unit 303 comprises a controller like a microcontroller and a communication element for communicating with the electrical devices 308, 309, 310 via the communication mechanism 314. In particular, the reducing unit 303 receives the loads of the electrical devices 308, 309, 310 via the communication mechanism 314 and comprises a switch for breaking the circuit in accordance with breaking rules, which may be stored in a storage unit of the reducing unit 303. The breaking rules define which overload detection device should break the circuit depending on which load conditions. This allows a kind of load balancing. For example, if it is known that the first electrical device 308 and/or the third electrical device 310 sometimes require power leading to an overload condition, the breaking rules could define that the first overload detection unit 301 should break the circuit, whenever the first electrical device 308 requires too much power, such that the second electrical device 309 is still powered by the second power supply 315. The breaking rules can further define that the second overload detection device 317 breaks the circuit, whenever the first electrical device 308 requires relatively low power, in particular, is switched off, and the third electrical device 310 requires a relatively high power. In this case, the second electrical device 309 is powered by the first DC voltage source 4. The overload detection devices 301, 317 separate the segments therefore such that an optimized power balancing is achieved.

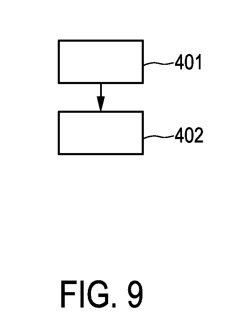

Fig. 9 shows a flowchart exemplarily illustrating an embodiment of an overload detection method for detecting an overload condition in a DC system comprising a DC voltage source and several electrical devices electrically connected to the DC voltage source.

In step 401, an overload detection unit of an overload detection device detects an overload condition, and, in step 402, the power consumed by an electrical device of the several electrical devices is reduced by a reducing unit of the overload detection device, if the overload detection unit detects the overload condition.

DC power distribution systems can lead to a simplification of load power components, to energy saving by reduction of distribution and conversion losses as well as to simplified integration of local green energy sources. In the DC power distribution system the DC voltage source can comprise an AC/DC conversion unit for converting AC voltage in the required DC voltage. Alternatively or in addition, a DC energy source, in particular, a renewable DC energy source, can be used as the DC voltage source. For safety reasons, the DC voltage source preferentially limits the supplied voltage and current. For example, the DC voltage source can be adapted to fulfill the EMerge alliance specification requiring conformance with the NFPA National Electric Code for low voltage (24 V) DC installations, thus limiting the available power to 100 VA per electrical conductor, in particular, per bus bar.

In practice, the load can be higher than foreseen and overloads can occur. Such an overload can be produced by instability of the DC system in particular operational phases like initial charging of capacities after switching on or by a glitch of the mains. In self-managed systems more electrical devices can be added than provisioned, which can also lead to an overload condition.

Known DC voltage sources like the DC voltage source of the company NexTek continuously monitor the total load on a single bus bar. As soon as an overload is detected, it completely switches off the bus bar with all loads connected to it and then goes into a mode, where it retries to power the bus bar. In particular, it verifies whether the overload is still present. If it is still present, it again switches off the power. Typically, the overload is still present, because the load is not adjusted, until some manual intervention is done. Consequently, the DC voltage source electronics runs into a livelock that it cannot exit and an installer needs to be urgently called. Depending on the exact combination of peripherals and power supply, there can be nasty side effects for the user like blinking lights, constantly being turned on and off.

The overload detection device described above with reference to, for instance, Figs. 1 and 2 allows for an automatic recovery of parts of an installation during an overload. Integrity and stability of the installation can be guaranteed without external intervention. There is less urgency to call maintenance, because the system integrity will not represent a threat. If more than one overload occurs, the system will still function and it will generally not be completely switched off. Moreover, before overload occurs, the overload can additionally be used to indicate the available load margin one or several bus bars can support. For instance, the overload detection device 201 described above with reference to Figs. 5 and 6 can receive the power required by the electrical devices 208, 209, 210 and can compare the resulting required total power with the total available power, in order to determine how much power is left for possible additional electrical devices that maybe installed. The overload detection device can comprise a display for allowing the overload detection device to show the remaining available power to a user.

The overload detection device can be regarded as being an overload breaker, i.e. a small part of electronics that in normal operation ensures that there is energy flowing on both sides, but breaks the electrical circuit, once an overload condition is detected. This detector can be added into a special bus bar or alternatively it can be shaped in the form of a connector between existing off-the-shelf bus bars.

The overload breaker checks for overload conditions on the bus bar and, if an overload is detected, breaks the electrical circuit. This overload detection is generally not required for safety and can be built on the fact that in an overload condition, the DC voltage source may already switch off the power. As a consequence of breaking at the overload breaker position only a part of the bus bar is disconnected, i.e. the part of the bus bar on the side of the breaker that is not connected to the DC voltage source, i.e. that is not connected to the power supply. Thereby the load is reduced to a level below the allowed power limit, but the main part of the bus bar may still function.

The failure recovery mechanisms in the DC voltage source can successfully recover, because upon a re-powering only a smaller part of the one or several powered bus bars is powered. As mentioned above with reference to Figs. 3 and 4, in order to ensure that the largest possible part remains powered, the overload breaker can add a delay before switching off. The delay is preferentially chosen such that it decreases with increasing distance to the power supply connector. This distance maybe encoded, for instance, through configuration when integrated in bus bars. The distance may also be detected automatically. Then, first the overload breaker furthest away from the power supply connector disconnects the remainder of the bus bar. If this is sufficient, the failure recovery of the power supply will automatically restart the remainder of the loads, i.e. of the electrical devices. If not, the next overload breaker will disconnect, and so on.

In an embodiment, a control mechanism, which may be based on Zigbee, can be used to improve the recovery. For instance, after the initial circuit has been broken by the overload breaker, i.e. by the overload detection device, and the power supply has ensured its automatic restart, an entity in the system, for instance, the overload breaker, can determine which device has the lowest load on the system. This could be done by using Zigbee, in particular, by using attributes of Zigbee, and/or by using previous load measurements. For instance, the overload breaker that broke the overload can determine the electrical device having the lowest possible load on the system. Through a control mechanism it may switch off this electrical device. This removes the load from the system. It subsequently undoes its own overload-breaking and essentially reconnects the bus bars. If the electrical device that was switched off is large enough to bring back the system load under the boundary of, for instance, 100 VA, the system is successfully recovered and only one load is switched off. If switching off this single load, i.e. this single electrical device, was insufficient and if the total load on the bus bar is still too high, an other round of power overloads, overload breaking and recovery can be triggered. In another embodiment, the overload breaker can be adapted to switch off the electrical device having a load being high enough to bring the system immediately back to an acceptable total load. Moreover, smart-grid-like interfaces can be used to request electrical devices to consume less power. The automatic recovery together with existing recovery mechanisms in power supplies allow a much larger part of the DC system to continue successful operation before calling installers.

The EMerge standard provides a standard for bus bars used by, for instance, Armstrong bars which are metal bars with 2x2 electric layers, but which do not comprise electronics. The overload detection device can be integrated in such a bus bar that further has the same electrical and mechanical properties. The EMerge standard also specifies mechanical features for connecting bus bars. The overload detection device is preferentially adapted such that it fulfills this standard in a way that it can be regarded as an independent connector that fits bus bars, which fulfill the EMerge standard. Alternatively, the overload detection device can also be adapted to be integrated into a bus bar. The overload detection device can be adapted to fulfill the US National Electric Code limitations for power based on safety. In particular, the overload detection device can be adapted to check for the limit of 100 VA (24 V at maximal 4 A) for the common UL Class 2.

The electronics of the overload detection device can comprise an overload detection unit like a zero power detector, and a reducing unit, which may include a switching unit for breaking a circuit at overload and optionally a load or bar selection mechanism and communication/control means for disconnecting specific loads through, for instance, Zigbee. For instance, with reference to Fig. 3 in an embodiment the overload detection devices 101, 113 and 114 can be adapted to regularly collect information regarding power and energy usage from electrical devices 108 to 112 or other application specific information such as whether the electrical device 108 is an emergency lighting device and the electrical device 112 is a game console. The overload detection devices can further be adapted to selectively switch at least one of the electrical devices 108 to 112 off, if an overload condition has been detected, based on the collected information. For example, if an overload condition has been detected, the overload detection device 114 can switch off the game console 112, and the overload detection device 101 does not switch off the emergency lighting device 108. A bar selection can be provided, for instance, by using several overload detection devices between several bus bars and the DC voltage source, wherein each of these overload detection devices is arranged such that the respective entire bus bar is switched off, if the respective overload detection device breaks the circuit.

The overload detection device can comprise a control unit, in particular, the reducing unit of the overload detection device can comprise a control unit. For instance, the overload detection device can sense the overload and, once the power controller, i.e. the DC voltage source, switches off the one or several bus bars, the overload detection device can independently switch off the smallest load. The power will then be restarted and the one or several bus bars will be powered again and functional, if switching off the smallest load has led to a removal of the overload condition. If the overload still exists, the overload detection device can switch on the smallest load and switch off the next smallest load. In this way the overload can be found and the one or several bus bars will still be powered with a substantial number of electrical devices. This sensing mechanism can also be used for load balancing, if the information on heaviness of the sources is available. In addition, the overload detection device can also use information about the function of the load and act accordingly. For instance, it can switch on only some lights in a particular room or of a particular group of lights, in order to assure that a minimally required illumination level is still provided. Or the overload detection device can switch off a particular load type, for instance, it can preferably switch off accent light rather than general light. Load balancing/peak shedding can also be used for buy-in the cheapest available power coming from the mains or directly from the power plants. For instance, in Fig. 7 the first DC voltage source 4 and the second DC voltage source 315 can correspond to different kinds of energy sources like an alternative on-site energy source, an energy storage unit such as a battery, an on-demand priced energy source et cetera. The overload detection devices 301, 317 can be adapted to break the circuit such that a desired DC voltage source powers the electrical devices. In an embodiment, the overload detection devices are battery powered and can communicate with a master in the DC system, which may also be regarded as a DC voltage distribution network. The master could be integrated into the DC voltage source and it could be adapted to perform further operations regarding the voltage distribution.

In an embodiment, the overload detection devices can be adapted such that, after an overload detection device has detected an overload condition, a communication takes place between the overload detection devices and optionally the electrical devices. For performing the communication the devices can comprise communication units which maybe adapted to use Zigbee. The communication reveals information based on which it can be decided which action is to be performed, for instance, which overload detection device should break the circuit. The information is, for instance, information about the power consumed by the respective electrical devices.

The DC system can be adapted to be in conformance with the EMerge alliance 24 V DC grid standard. It can be adapted to all sorts of applications in professional and customer/SOHO (Small Office Home Office) use. In particular, it can be adapted for lighting, HVAC (Heating, Ventilating and Air Conditioning), sensing, data center, workplace equipment, et cetera applications.

Although in above described embodiments Zigbee is preferentially used as a communication mechanism, in other embodiments also other communication mechanism can be used like IP or DALI.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Operations like detecting an overload condition, reducing the power consumed by electrical devices, communicating between electrical devices and overload detection devices, comparing of present loads with load limits, determining required actions based on predefined rules, et cetera performed by one or several units or devices can be performed by any other number of units or devices. For instance, the operations described above as performed by the reducing unit can also be performed by any other number of different units or devices. These operations and/or the control of the overload detection device and, thus, the DC system in accordance with the overload detection method can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. An overload detection device for detecting an overload condition in a DC system (205) comprising a DC voltage source (4) and several electrical devices (208, 209, 210) electrically connected to the DC voltage source (4), the overload detection device (201) comprising:
- an overload detection unit (202) for detecting the overload condition,
- a reducing unit (203) for reducing the power consumed by an electrical device of the several electrical devices (208, 209, 210), if the overload detection unit (202) detects the overload condition,
**characterized in that** the reducing unit (203) is adapted to prevent the electrical devices (208, 209, 210) one after the other from consuming power from the DC voltage source (4) in accordance with an order defined by their respective loads, as long as an overload condition is detected.

2. The overload detection device as defined in claim 1, wherein the reducing unit (203) is adapted to switch off the electrical devices one after the other in an increasing load order.

3. The overload detection device as defined in claim 2, wherein the reducing unit (203) is adapted to restore the consumption of power by an electrical device, if an, in accordance with the increasing load order, following electrical device has been prevented from consuming power.

4. The overload detection device as defined in claim 1, wherein the reducing unit (203) is adapted to determine the smallest number of electrical devices such that, if these electrical devices are prevented from consuming power from the DC voltage source (4), the overload condition is not present anymore, and to prevent these electrical devices from consuming power from the DC voltage source.

5. The overload detection device as defined in claim 1, wherein the reducing unit (203) is adapted to request an electrical device to consume less power in accordance with request rules, if the overload condition is detected.

6. A bus bar for electrically connecting a DC voltage source with several electrical devices, wherein the bus bar comprises an overload detection device as defined in claim 1.

7. A DC system comprising:
- a DC voltage source (4) for supplying DC power to electrical devices (208, 209,210),
- electrical devices (208, 209, 210),
- an electrical conductor (206) for electrically connecting the DC voltage source (4) with the electrical devices (208, 209, 210),
- an overload detection device (201) as defined in claim 1.

8. The DC system as defined in claim 7, wherein the DC voltage source (4) comprises a voltage source overload detection unit for detecting an overload condition in the DC system (205), wherein the DC voltage source (4) is adapted to switch the supplying of power off, if an overload condition is detected, and to switch the supplying of power on, if the overload is not detected anymore.

9. The DC system as defined in claim 8, wherein the overload detection device (201) is adapted to perform the overload detection and power consumption reduction procedures in a first time duration, wherein the DC voltage source (4) is adapted to perform the overload detection and power switching off procedures in a second time duration, wherein the first time duration is smaller than the second time duration.

10. An overload detection method for detecting an overload condition in a DC system (205) comprising a DC voltage source (4) and several electrical devices (208, 209, 210) electrically connected to the DC voltage source (4; 315), the overload detection method comprising:
- detecting the overload condition by an overload detection unit (202),
- reducing the power consumed by an electrical device of the several electrical devices (208, 209, 210) by a reducing unit (203), if the overload detection unit (202) detects the overload condition, **characterized in**
- preventing the electrical devices (208, 209, 210) one after the other from consuming power from the DC voltage source (4) in accordance with an order defined by their respective loads, as long as an overload condition is detected.

11. An overload detection computer program for detecting an overload condition in a DC system (205) comprising a DC voltage source (4) and several electrical devices (208, 209, 210) electrically connected to the DC voltage source (4), the overload detection computer program comprising program code means for causing an overload detection device (201) as defined in claim 1 to carry out the steps of the overload detection method as defined in claim 10, when the overload detection computer program is run on a computer controlling the overload detection device (201).

## Patentansprüche

1. Überlastdetektionsvorrichtung zum Detektieren eines Überlastzustands in einem DC-System (205) mit einer DC-Spannungsquelle (4) und mehreren mit der DC-Spannungsquelle (4) elektrisch verbundenen elektrischen Einrichtungen (208, 209, 210), wobei die Überlastdetektionsvorrichtung (201) umfasst:
- eine Überlastdetektionseinheit (202) zum Detektieren des Überlastzustands,
- eine Reduktionseinheit (203) zur Reduzierung der von einem elektrischen Gerät der mehreren elektrischen Geräte (208, 209, 210) aufgenommenen Leistung, wenn die Überlastdetektionseinheit (202) den Überlastzustand detektiert,
**dadurch gekennzeichnet, dass** die Reduktionseinheit (203) so eingerichtet ist, dass sie verhindert, dass die elektrischen Geräte (208, 209, 210) nacheinander Leistung von der DC-Spannungsquelle (4) entsprechend einer durch ihre jeweiligen Lasten definierten Reihenfolge aufnehmen, solange ein Überlastzustand detektiert wird.

2. Überlastdetektionsvorrichtung nach Anspruch 1, wobei die Reduktionseinheit (203) so eingerichtet ist, dass sie die elektrischen Geräte in einer zunehmenden Lastreihenfolge nacheinander ausschaltet.

3. Überlastdetektionsvorrichtung nach Anspruch 2, wobei die Reduktionseinheit (203) so eingerichtet ist, dass sie die Leistungsaufnahme durch ein elektrisches Gerät wiederherstellt, wenn verhindert wurde, dass ein der zunehmenden Lastreihenfolge entsprechend nachfolgendes elektrisches Gerät Leistung aufnimmt

4. Überlastdetektionsvorrichtung nach Anspruch 1, wobei die Reduktionseinheit (203) so eingerichtet ist, dass sie die kleinste Anzahl von elektrischen Geräten ermittelt, so dass, wenn verhindert wird, dass diese Geräte Leistung von der DC-Spannungsquelle (4) aufnehmen, der Überlastzustand nicht mehr besteht, und sie verhindert, dass diese elektrischen Geräte Leistung aus der DC-Spannungsquelle aufnehmen.

5. Überlastdetektionsvorrichtung nach Anspruch 1, wobei die Reduktionseinheit (203) so eingerichtet ist, dass sie ein elektrisches Gerät auffordert, weniger Leistung entsprechend Anforderungsregeln zu verbrauchen, wenn der Überlastzustand detektiert wird.

6. Stromschiene, um eine DC-Spannungsquelle mit mehreren elektrischen Geräten elektrisch zu verbinden, wobei die Stromschiene eine Überlastdetektionsvorrichtung nach Anspruch 1 umfasst.

7. DC-System, umfassend:
- eine DC-Spannungsquelle (4), um elektrischen Geräten (208, 209, 210) DC-Leistung zuzuführen,
- elektrische Geräte (208, 209, 210),
- einen elektrischen Leiter (206), um die DC-Spannungsquelle (4) mit den elektrischen Geräten (208, 209, 210) elektrisch zu verbinden,
- eine Überlastdetektionsvorrichtung (201) nach Anspruch 1.

8. DC-System nach Anspruch 7, wobei die DC-Spannungsquelle (4) eine Spannungsquellenüberlastdetektionseinheit umfasst, um einen Überlastzustand in dem DC-System (205) zu detektieren, wobei die DC-Spannungsquelle (4) so eingerichtet ist, dass sie die Leistungszufuhr abschaltet, wenn ein Überlastzustand detektiert wird, und die Leistungszufuhr einschaltet, wenn keine Überlast mehr detektiert wird.

9. DC-System nach Anspruch 8, wobei die Überlastdetektionsvorrichtung (201) so eingerichtet ist, dass sie die Überlastdetektion und Leistungsaufnahmereduzierung während einer ersten Zeitdauer ausführt, wobei die DC-Spannungsquelle (4) so eingerichtet ist, dass sie die Überlastdetektion und den Leistungsabschaltvorgang während einer zweiten Zeitdauer ausführt, wobei die erste Zeitdauer geringer als die zweite Zeitdauer ist.

10. Überlastdetektionsverfahren zum Detektieren eines Überlastzustands in einem DC-System (205) mit einer DC-Spannungsquelle (4) und mehreren mit der DC-Spannungsquelle (4; 315) elektrisch verbundenen elektrischen Geräten (208, 209, 210), wobei gemäß dem Überlastdetektionsverfahren:
- der Überlastzustand von einer Überlastdetektionseinheit (202) detektiert wird,
- die von einem elektrischen Gerät der mehreren elektrischen Geräte (208, 209, 210) aufgenommene Leistung von einer Reduktionseinheit (203) reduziert wird, wenn die Überlastdetektionseinheit (202) den Überlastzustand detektiert, **dadurch gekennzeichnet, dass**
- verhindert wird, dass die elektrischen Geräte (208, 209, 210) nacheinander Leistung von der DC-Spannungsquelle (4) entsprechend einer durch ihre jeweiligen Lasten definierten Reihenfolge aufnehmen, solange ein Überlastzustand detektiert wird.

11. Überlastdetektionscomputerprogramm, um einen Überlastzustand in einem DC-System (205) mit einer DC-Spannungsquelle (4) und mehreren mit der DC-Spannungsquelle (4) elektrisch verbundenen elektrischen Geräten (208, 209, 210) zu detektieren, wenn das Überlastdetektionscomputerprogramm Programmcodemittel umfasst, um zu bewirken, dass eine Überlastdetektionsvorrichtung (201) nach Anspruch 1 die Schritte des Überlastdetektionsverfahrens nach Anspruch 10 ausführt, wenn das Überlastdetektionscomputerprogramm auf einem die Überlastdetektionsvorrichtung (201) steuernden Computer abläuft.

## Revendications

1. Dispositif de détection de surcharge pour détecter un état de surcharge dans un système à CC (205) comprenant une source de tension continue (4) et plusieurs dispositifs électriques (208, 209, 210) connectés électriquement à la source de tension continue (4), le dispositif de détection de surcharge (201) comprenant :
- une unité de détection de surcharge (202) pour détecter l'état de surcharge,
- une unité de réduction (203) pour réduire la puissance consommée par un dispositif électrique des multiples dispositifs électriques (208, 209, 210), si l'unité de détection de surcharge (202) détecte l'état de surcharge,
**caractérisé en ce que** l'unité de réduction (203) est adaptée pour empêcher les dispositifs électriques (208, 209, 210), les uns après les autres, de consommer la puissance provenant de la source de tension continue (4) conformément à un ordre défini par leurs charges respectives, tant qu'un état de surcharge est détecté.

2. Dispositif de détection de surcharge selon la revendication 1, dans lequel l'unité de réduction (203) est adaptée pour désactiver les dispositifs électriques les uns après les autres dans un ordre de charge croissant.

3. Dispositif de détection de surcharge selon la revendication 2, dans lequel l'unité de réduction (203) est adaptée pour rétablir la consommation d'énergie par un dispositif électrique, si, conformément à l'ordre de charge croissant, un dispositif électrique suivant a été empêché de consommer de la puissance.

4. Dispositif de détection de surcharge selon la revendication 1, dans lequel l'unité de réduction (203) est adaptée pour déterminer le plus petit nombre de dispositifs électriques de sorte que, si ces dispositifs électriques sont empêchés de consommer la puissance provenant de la source de tension continue (4), l'état de surcharge ne soit plus présent, et pour empêcher ces dispositifs électriques de consommer la puissance provenant de la source de tension continue.

5. Dispositif de détection de surcharge selon la revendication 1, dans lequel l'unité de réduction (203) est adaptée pour demander à un dispositif électrique de consommer moins d'énergie conformément à des règles de demande, si l'état de surcharge est détecté.

6. Barre omnibus pour connecter électriquement une source de tension continue à plusieurs dispositifs électriques, dans laquelle la barre omnibus comprend un dispositif de détection de surcharge tel que défini dans la revendication 1.

7. Système à CC comprenant :
- une source de tension continue (4) pour apporter de la puissance continue aux dispositifs électriques (208, 209, 210),
- des dispositifs électriques (208, 209, 210),
- un conducteur électrique (206) pour connecter électriquement la source de tension continue (4) aux dispositifs électriques (208, 209, 210),
- un dispositif de détection de surcharge (201) tel que défini dans la revendication 1.

8. Système à CC selon la revendication 7, dans lequel la source de tension continue (4) comprend une unité de détection de surcharge de source de tension pour détecter un état de surcharge dans le système à CC (205), dans lequel la source de tension continue (4) est adaptée pour désactiver l'apport de puissance, si un état de surcharge est détecté, et pour activer l'apport de puissance, si la surcharge n'est plus détectée.

9. Système à CC selon la revendication 8, dans lequel le dispositif de détection de surcharge (201) est adapté pour effectuer les procédures de détection de surcharge et de réduction de consommation de puissance dans une première durée de temps, dans lequel la source de tension continue (4) est adaptée pour effectuer les procédures de détection de surcharge et de désactivation de puissance dans une seconde durée de temps, dans lequel la première durée de temps est plus petite que la seconde durée de temps.

10. Procédé de détection de surcharge pour détecter un état de surcharge dans un système à CC (205) comprenant une source de tension continue (4) et plusieurs dispositifs électriques (208, 209, 210) électriquement connectés à la source de tension continue (4 ; 315), le procédé de détection de surcharge comprenant :
- la détection de l'état de surcharge par une unité de détection de surcharge (202),
- la réduction de la puissance consommée par un dispositif électrique des multiples dispositifs électriques (208, 209, 210) par une unité de réduction (203), si l'unité de détection de surcharge (202) détecte l'état de surcharge, **caractérisé par**
- le fait d'empêcher les dispositifs électriques (208, 209, 210), les uns après les autres, de consommer la puissance provenant de la source de tension continue (4) conformément à un ordre défini par leurs charges respectives, tant qu'un état de surcharge est détecté.

11. Programme informatique de détection de surcharge pour détecter un état de surcharge dans un système à CC (205) comprenant une source de tension continue (4) et plusieurs dispositifs électriques (208, 209, 210) électriquement connectés à la source de tension continue (4), le programme informatique de détection de surcharge comprenant un moyen de code de programme pour amener un dispositif de détection de surcharge (201) tel que défini dans la revendication 1 à réaliser les étapes du procédé de détection de surcharge tel que défini dans la revendication 10, quand le programme informatique de détection de surcharge est exécuté sur un ordinateur commandant le dispositif de détection de surcharge (201).
